# EUROPEAN PATENT APPLICATION

(11) **EP 4 815 295 A1**
(43) Date of publication of application: **30.09.2026**
(21) Application number: 25166034.6
(22) Date of filing: 25.03.2025
(51) Int. Cl.: H02S 20/30, H02S 30/10, F24S 25/11

(54) **A BOX AND BALLAST STORAGE SUPPORT SET FOR THE INSTALLATION OF PHOTOVOLTAIC PANELS**

(71) Applicant: Fortlev Energia Solar Ltda, ES 29168-045 Serra (BR)
(72) Inventor: TORRES, Antônio Carlos, ES 29065-310 Vitória (BR)
(74) Representative: Rapisardi, Mariacristina

(57) **Abstract**

It refers to a set (1) that is composed of a box (2) formed by the base (4), which houses a pair of supports (3) designed to support the structure (ES) of a photovoltaic (PV) panel. The box (2) has vertical grooves (5) on the outer face, which turn into reinforcing ribs (6) on the inside. The base (4) has a central sectioning (7) that creates two housings (8A) and (8B) for the filling of ballast (L); the upper perimeter (S) of the base (4) is formed by an edge (9) which, on the rear face (P), is raised (10) and features a horizontal edge (9A) and a curved edge (9B) with three holes (F1). The edge (9) becomes a slanted edge (9C) on the front face (F); the pair of supports (3) has an edge (11) at the bottom (IN) with a curve (11A) aligned with the curved edge (9B) of the base. This curved edge has 90° folds at the ends, forming two flaps (12) and contains equidistant holes (F2) as well as end housings (13) for rods (14) that connect the supports. Each flap (12) also has holes (F3) and is closed laterally by a plate (15) with longitudinal channels (16) that reinforce the structure.

## Description

### INTRODUCTION

This is a patent application for a novel Constructive Arrangement Applied to a Box and Ballast Storage Support Set for the Installation of Photovoltaic Panels, which can be accommodated on soils or slabs in the construction of power plants. The improved construction arrangement features a curvature on the top face of the box and on the support at the bottom, which also has a curvature. When the support with the curved face is installed in the curvature of the box, it allows for an adjustment, set at an ideal angle for the installation of the photovoltaic panel, optimizing the capture of sunlight. Finally, the box and support feature additional reinforcements at strategic points to ensure that the set has mechanical strength.

### FIELD OF APPLICATION

The innovative box and support assembly is used in the solar energy segment, applicable to residential, commercial, and industrial rooftops. In addition, the innovative box and support set is especially effective in flat and compacted areas, allowing the formation of photovoltaic power plants.

### PERSUASION

The innovation consists of a set of boxes complemented by a support intended to accommodate the photovoltaic panels. This new construction arrangement aims to provide a quick and uncomplicated installation, without the need for drilling. In addition, the project uses resistant and recyclable materials, such as polymers, preferably manufactured through the rotational molding process **or blow molding.** However, this does not exclude the possibility of using similar materials and other manufacturing processes, always with the aim of minimizing environmental impact. This approach not only promotes sustainability but also contributes to the durability of the product by increasing its lifespan and reducing the need for frequent replacements.

Another improvement sought by the box and support set is the adjustment of the angle of the photovoltaic panels. This combination of construction forms is simple and efficient, also allowing the future relocation of photovoltaic panels; mobility is an important feature of this system. In addition, this flexibility makes it possible to adapt the panels to weather conditions and the needs of capturing sunlight during different times of the year. Clear and constant communication between those involved in the installation and maintenance process is crucial to ensure the originality of the design and optimize the application of the product in various contexts, contributing to the popularization and efficiency of the use of solar energy.

### STATE OF THE ART

For the construction of a photovoltaic plant, it is currently necessary to develop a project for a metallic structure, which has the pillars fixed to the ground using "parabolt anchor" type screws, or to construct concrete pillars, methods that require time for both planning and implementation. In addition, these structures are fixed, preventing the displacement of the assembled plant, especially in the case of concrete structures. Thus, it is essential that the installation site is suitable or planned for the long term in order to avoid the dismantling of the plant.

In the market, there are also concrete modules, or more commonly known as precast, which function similarly to the methods already described in the previous paragraph, requiring the drilling of holes for the installations.

Another recently developed method consists of polyethylene boxes, which have a hollow interior for the insertion of ballast, such as sand, remains of building materials, gravel, or a mixture thereof. The boxes have a rectangular trapezoid shape, with the inclined face facing upwards (hypotenuse), allowing the installation of the photovoltaic panels to achieve the desired angle and slope, which are provided by additional materials, as this is difficult to achieve with the boxes alone. This method, on the other hand, alleviates some of the drawbacks of the methods mentioned earlier.

The innovation is a polyethylene box made by a rotomolding process, with compartments that allow for the storage of ballast, where the functional improvement involves replacing the inclined face with a curvature, which is complemented by another innovative piece with the same curvature, allowing it to slide along the curvature of the box. The piece is a support, responsible for the installation of photovoltaic panels.

This constructive arrangement also allows for a more simplified adjustment of the angle of the panels at the time of installation, as the lateral curvatures are used as a rail where the support of the plates slides and is later fixed in the desired position (angle).

### PATENT DOCUMENTS FROM THE STATE OF THE ART

In-depth searches turned up patent documents; however, the functional improvements provided by the proposed patent application are not relevant.

DOCUMENT: US2017111006 AA entitled *"SOLAR PANEL SUPPORT DEVICES AND RELATED SOLAR PANEL SUPPORT SYSTEMS"* - includes a body with a top mounting surface, a bottom base surface, and integral ballast. The top mounting surface is inclined relative to the bottom base surface. The support device also includes at least one mounting element that protrudes upwards from the upper mounting surface and is configured to support a solar panel. A solar panel support system includes first and second support devices spaced apart from each other, each including a body with a top mounting surface, a bottom base surface, and integral ballast, with the top mounting surface being inclined relative to the bottom base surface.

The device anticipated in the document above, despite being of complete ballast, that is, in concrete, claims a system for angular adjustment of the solar panels, supported on purlins between at least two devices, represented by two plates opposed at 90°, in which one of them features a pair of oblongs traversed by the complementary plate connected to the solar panel.

DOCUMENT: CN 208386467 U entitled *"SOLAR PHOTOVOLTAIC BOARD MOUNT PAD"* - characterized by the mounting body being integrally molded from SMC composite material and having a receiving cavity adapted to accommodate a plurality of gravity members; the mounting surface is formed on the mounting body at a certain oblique angle around the receiving cavity hole, and the photovoltaic solar panel is arranged obliquely on the mounting surface; a plurality of support column structures are formed on the inner walls on both sides of the mounting body and are sequentially descending along the direction extending obliquely from the mounting surface; the mounting comprises two fixing members arranged respectively at two ends of the mounting surface by a positioning structure, and between the two fixing members, a photovoltaic solar panel suitable for fixing is arranged.

The solar panel mounting block in the document above, despite being rotomolded, has the fixation performed on the lower and upper edges without any possibility of angular adjustment. A technical limitation is the large size of the mounting block, since each part supports a solar panel. In addition, the fixation, only on the lower and upper edges, is insufficient to withstand the force resulting from the action of winds acting on the solar panel. Finally, the single cavity benefits the movement of the load inside the block.

### INVENTION

The innovation in the constructive arrangement of the product stands out for featuring a curvature on the upper face of the box and on the lower part of the support.

When the support with the curved face is installed in the curvature of the box, it allows for a precise adjustment of the angulation, defining the ideal position for the installation of the photovoltaic panels. This adjustment optimizes the capture of sunlight, increasing the efficiency of the system.

In addition, both the box and the support are equipped with additional reinforcements at strategic points, ensuring the mechanical strength necessary to withstand different weather conditions. This design not only ensures the stability and durability of the structure, but also promotes a practical and effective installation.

The combination of curvatures and structural reinforcements in the support model is a smart solution that maximizes solar absorption efficiency while ensuring the robustness and adaptability of the system in varied environments.

### ADVANTAGES OF THE INVENTION

Quick installation as only a wrench is used to fasten the M6 screws, for securing the Z profile and the solar panels.
- The constructive layout allows for easy assembly that does not require tools, screws, or drilling, significantly reducing installation time and complexity.

Sustainable materials - use of recyclable materials, such as polymers, that are not only durable but also contribute to environmental sustainability by aligning with the ecological practices required by the current market.

Durability - rotomolding and the choice of high-strength materials ensure a long product life, increasing reliability and reducing the need for maintenance or replacements.

Angle adjustment - the system allows for the adjustment of the angle of the panels, enabling the optimization of sunlight capture at different times of the day and under varied weather conditions.

Mobility and flexibility (Flexibility refers to the eventual need to move the plant from one location to another. e.g.: the land where the plant was installed has appreciated, the owner can dismantle it and later install it in another location)
- The structure is not permanently fixed, allowing for easy relocation of the plates. This flexibility is ideal for users who need to adjust the position of the installation as lighting conditions change or throughout the year.

Low environmental impact - the constructive arrangement and choice of materials aim to minimize environmental impact, which is increasingly valued by consumers and companies concerned about their ecological footprint.

Simplicity in constructive arrangement - the simplicity of the constructive form not only facilitates installation but also makes the product more accessible to a wide range of users, from beginners to professionals.
Cost reduction - the elimination of the need for tools and a complex installation process can result in cost savings for both installers and owners of photovoltaic panels.

Versatility - the system can be adapted to different sizes and types of photovoltaic panels, making it a viable solution for a wide range of applications, from residential to commercial.

Operational efficiency - the ease of assembly and maintenance allows users to better leverage solar power generation, increasing the overall efficiency of the energy system.

### FIGURES PROPOSED FOR THE PATENT

The patent will be described in detail below, and, for better understanding, reference will be made to the accompanying drawings, in which the following are represented.

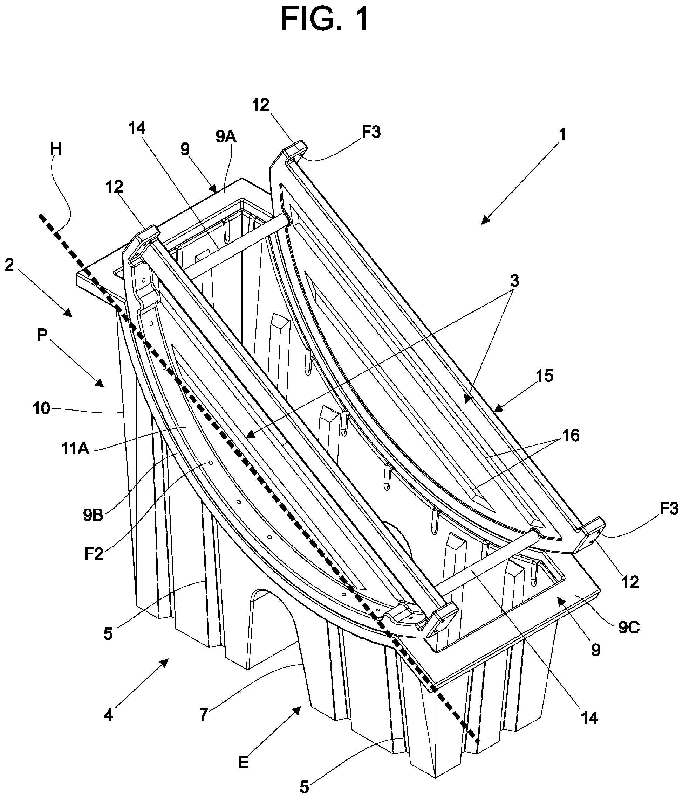

Figure 1: Perspective view of the assembled box and support set;

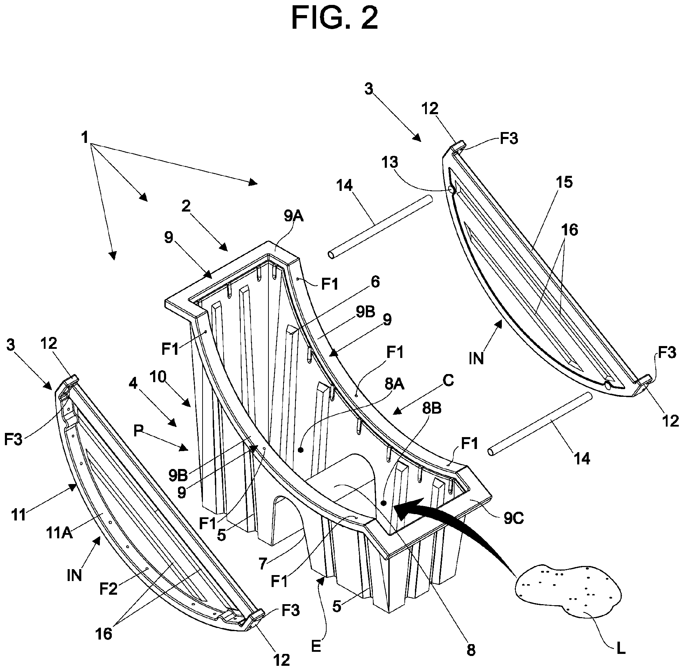

Figure 2: Exploded perspective view of the box and support set;

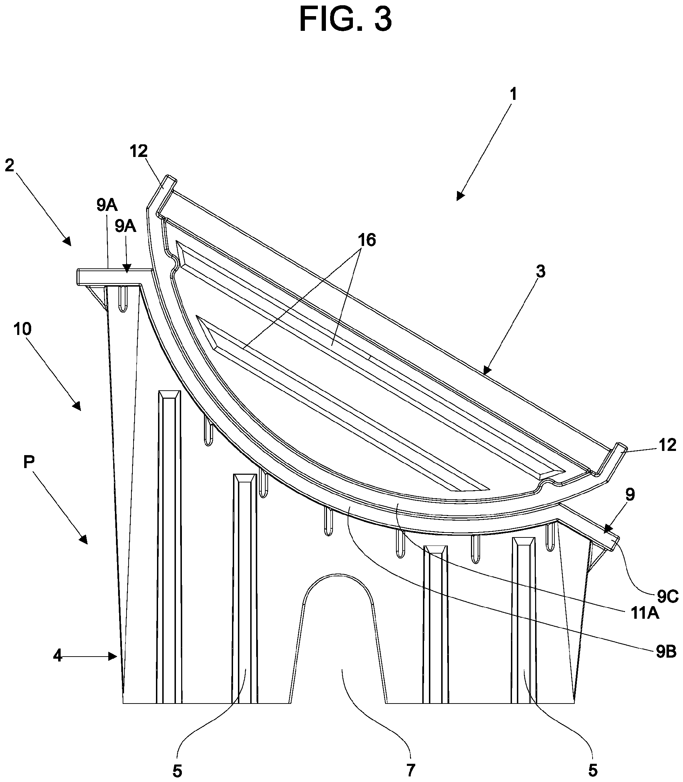

Figure 3: Side view of the assembled box and support set;

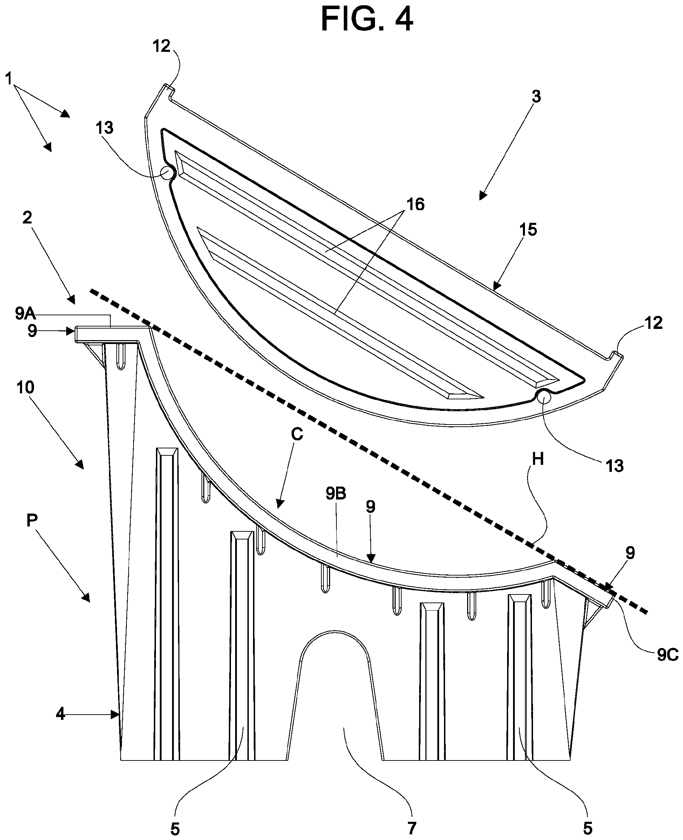

Figure 4: Side view of the separate box set and support;

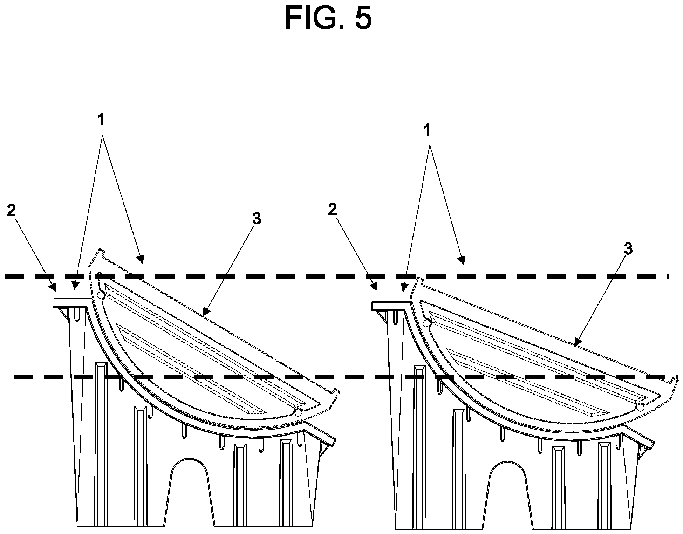

Figure 5: Side comparative view of the box set and mounted support, showing the difference in the angle of the support in relation to the box;

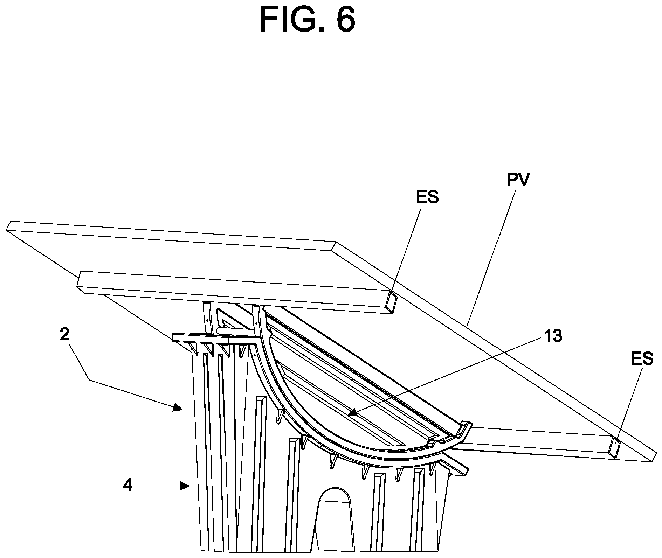

Figure 6: Perspective view of the box set and support mounted and installed by a photovoltaic plate;

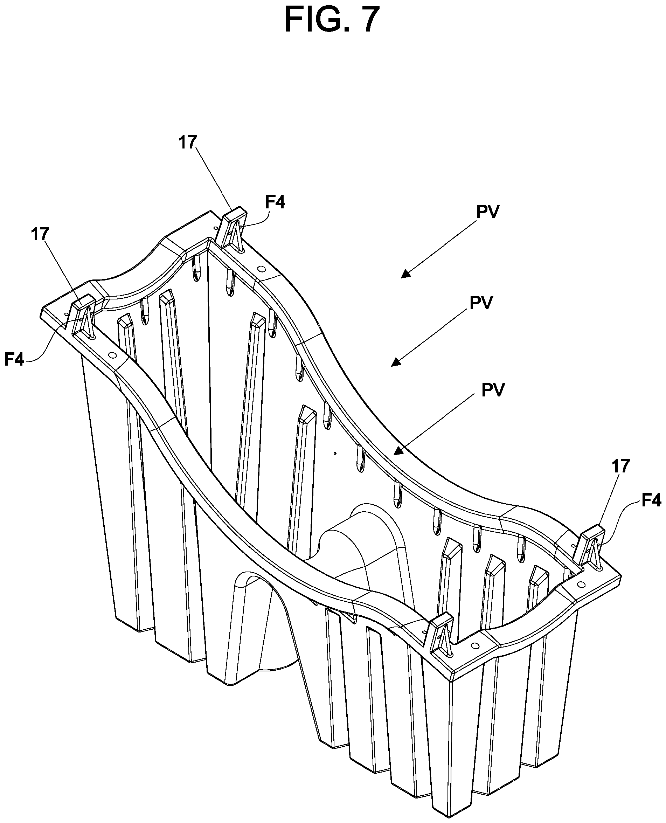

Figure 7: Perspective view of the box set in a constructive variation.

### TECHNICAL DESCRIPTION OF THE PATENT

Constructive Arrangement Applied to a Box And Ballast Storage Support Set for the Installation of Photovoltaic Panels, object of this patent application, refers to a set (1) formed by a box (2) and a pair of supports (3), designed to house the structure (ES) of a photovoltaic (PV) panel.

The box (2) has a shape like that of heel-type shoes. Its constructive arrangements include a base (4), whose outer face (E) is equipped with vertical grooves (5) that, on the internal side (I), result in vertical reinforcing ribs (6). The combination of the vertical grooves (5) on the outer face and the ribs (6) on the inner face provides strength to the base (4), following the principle of folds in sheets.

Still at the base (4), there is a central sectioning (7) that, when viewed from the inside (I), generates a partition (8), creating two compartments (8A) and (8B) for filling with ballast (L).

The upper perimeter (S) of the base (4) has a predominant hypotenuse line shape (H). The edge (9) is shaped so that, on the posterior face (P), the base (4) is raised (10). The edge (9) has a horizontal edge (9A) and, in the central region (C), a curved edge (9B) equipped with three equidistant holes (F1). On the frontal face (F), the border (9) becomes a slanted border (9C), following the line of the hypotenuse (H).

The pair of supports (3) is composed of a border (11) at the bottom (IN), which features a curved edge (11A) aligned with the curved edge (9B) of the base (4). This curved edge (11A) has 90° folds at the ends, forming two flaps (12). The edge (11A) also features equidistant holes (F2) and two end housings (13) for the insertion of rods (14) that connect the pair of supports (3). Each of the tabs (12) also has holes (F3).

Finally, each piece of the pair of supports (3) is laterally closed by a plate (15) equipped with longitudinal channels (16) that provide additional reinforcement to the structure.

**Assembly and Operation:** The box (2) must be positioned on a flat base, such as a paved area, on compacted soil, or on a slab that supports a weight of more than 400 kg/m². To ensure the stability of the assembly, fill the housings (8A) and (8B) with the ballast (L) in a balanced manner.

Check that the top perimeter (S) of the base (4), where the edge (9) is formed, is clean. Next, take the pair of supports (3) and align the bottom edge (IN) with the curved edge (9B) of the base (4). Then insert the rods (14) into the end housings (13) of the supports (3), ensuring that they are firm and well seated.

After mounting the supports (3), adjust as necessary for positioning in relation to the sun. This adjustment must be done by aligning the holes (F2) of the edge (11) with the holes (F1) of the edge (9) of the base (4) and securing them with pins or other connecting elements.

In this way, the set formed by the box (2) and the supports (3) will be assembled and ready for the installation of the structure (ES) of the photovoltaic (PV) panels.

Innovation consists of a constructive variation, in which the new variation is represented by the box (2'). The edge (9), located on the hypotenuse line (H), has a curved configuration (9B') in the central region (C). The ends of the base (4) are composed of slanted flaps (17), which have holes (F4) intended for fixing the stringers of the structure (ES) of the photovoltaic (PV) panels.

## Claims

1. A Constructive Arrangement Applied to a Box and Ballast Storage Support Set for the Installation of Photovoltaic Panels, refers to a set (1) formed by a box (2) equipped with a base (4), wherein the set (1) comprises a pair of supports (3), designed to house the structure (ES) of a photovoltaic (PV) panel; the box (2), in turn, has at its base (4) on the outer face (E) vertical grooves (5) which, on the internal part (I), result in vertical reinforcing ribs (6); still at the base (4), there is a central sectioning (7) that, when viewed from the inside (I), generates a partition (8), creating two housings (8A) and (8B) for filling ballast (L); the upper perimeter (S) of the base (4) is formed by an edge (9), in which the back face (P) of the base (4) is raised (10) and in this region, the edge (9) defines a horizontal edge (9A) and, in the central region (C), a curved edge (9B) equipped with three equidistant holes (F1), on the front face (F) of the base (4), the edge (9) becomes a sloping edge (9C), following the line of the hypotenuse (H); the pair of supports (3) is composed of an edge (11) at the bottom (IN), which has a curve (11A) aligned with the curved edge (9B) of the base (4); the curved edge (11A) has 90° folds at the ends, forming two flaps (12); the edge (11A) contains equidistant holes (F2) and two extreme housings (13) for the introduction of rods (14) that join the pair of supports (3); each of the flaps (12) also has holes (F3), and finally, each piece of the pair of supports (3) is closed laterally by a plate (15) equipped with longitudinal channels (16) that provide additional reinforcement to the structure.

2. A Constructive Arrangement Applied to a Box and Ballast Storage Support Set for the Installation of Photovoltaic Panels of claim 1, in a constructive variation, wherein the box (2') comprises an edge (9), located on the hypotenuse line (H), having a curved configuration (9B') in the central region (C); the ends of the base (4) are composed of slanted flaps (17), which have holes (F4) intended for fixing the stringers of the structure (ES) of photovoltaic (PV) panels.
